(19) Europäisches Patentamt
European Patent Office
Office européen des brevets

(11) Veröffentlichungsnummer: **0 269 986 B1**

# (12) EUROPÄISCHE PATENTSCHRIFT

(45) Veröffentlichungstag der Patentschrift: **31.07.91**

(51) Int. Cl.[5]: **C08F 10/00**, C08F 4/642

(21) Anmeldenummer: **87117380.3**

(22) Anmeldetag: **25.11.87**

## (54) 1-Olefin-Stereoblockpolymer und Verfahren zu seiner Herstellung.

(30) Priorität: **29.11.86 DE 3640924**

(43) Veröffentlichungstag der Anmeldung:
**08.06.88 Patentblatt 88/23**

(45) Bekanntmachung des Hinweises auf die Patenterteilung:
**31.07.91 Patentblatt 91/31**

(84) Benannte Vertragsstaaten:
**BE DE ES FR GB IT NL**

(56) Entgegenhaltungen:
**EP-A- 0 185 918**
**US-A- 4 522 982**

**JOURNAL OF THE AMERICAN CHEMICAL SOCIETY, Band 106, Nr. 21, 1984, Seiten 6355-6364, American Chemical Society; J.A. EWEN: "Mechanisms of stereochemical control in propylene polymerizations with soluble group 4B metallocene/methylalumoxane catalysts"**

(73) Patentinhaber: **HOECHST AKTIENGESELLSCHAFT**
**Postfach 80 03 20**
**W-6230 Frankfurt am Main 80(DE)**

(72) Erfinder: **Kaminsky, Walter, Prof. Dr.**
**Buschweg 52**
**W-2080 Pinneberg(DE)**
Erfinder: **Buschermöhle, Maria, Dr.**
**Julius Brecht-Str. 3**
**W-2000 Hamburg 52(DE)**

**EP 0 269 986 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Stereoblockpolymer mit langen isotaktischen Sequenzen und ein Verfahren zu seiner Herstellung.

Es ist bekannt, daß beim Einsatz eines Katalysators auf Basis Bis-Cyclopentadienylverbindungen des Zirkons und Aluminoxan beim Polymerisieren von Propylen nur ataktisches Polymer erhalten wird (vgl. EP-A 69 951).

Außerdem kann mittels löslicher stereorigider chiraler Zirkonverbindungen hochisotaktisches Polypropylen hergestellt werden (vgl. EP-A 185 918).

Dieses Polypropylen weist eine sehr enge Molmassenverteilung von $M_w/M_n = 2$ auf.

Weiterhin bekannt ist ein Verfahren zur Herstellung von blockartig aufgebautem Polypropylen, in welchem die isotaktischen Sequenzen mehr als 2 Monomereinheiten lang sind (vgl. US-PS 4 522 982). Als Katalysator wird ein Metallocen eines Metalls der Gruppe 4b, 5b oder 6b des Periodensystems, beispielsweise Titan, Vanadium oder Hafnium, insbesondere Titan eingesetzt. Dieses Metallocen ist eine Mono-, Di- oder Tricyclopentadienyl- oder substituierte Cyclopentadienyl-Metallverbindung. Als Cokatalysator dient ein Aluminoxan. Die erhaltenen blockartig aufgebauten Polypropylene haben ebenfalls eine sehr enge Molmassenverteilung ($M_w/M_n = 2$).

Schließlich ist bekannt, daß die gleichzeitige Polymerisation mittels zwei oder mehr Metallocen-Katalysator-Systemen Polyethylen mit bimodaler Molmassenverteilung ($M_w/M_n$ bis 7,8) liefert (vgl. EP-A 128 045). Bei diesem Verfahren erhält man jedoch sogenannte Reaktorblends und kein mittels eines Katalysatorsystems erzeugtes homogenes Polymer.

Überdies liefern die in der genannten Druckschrift offenbarten rein achiralen Katalysatoren bei der Polymerisation von Propylen ataktisches Polypropylen.

Es bestand daher die Aufgabe, ein einheitliches Katalysatorsystem zu finden, welches ein Stereoblockpolymer mit einer breiten Molmassenverteilung erzeugt. Ein derartiges Polymer verspricht eine höhere Homogenität, welche die Grundlage für bessere mechanische Eigenschaften (z.B. Stippenfreiheit bei Folien, erhöhte Zähigkeit) ist.

Es wurde nun gefunden, daß die Aufgabe gelöst werden kann, wenn als Katalysator ein Metallocen, welches Brücken zwischen den pentahaptogebundenen Cyclopentadienylringen enthält, und ein Alumoxan verwendet werden.

Somit betrifft die Erfindung das in den Ansprüchen beschriebene Stereoblockpolymer und das Verfahren zu seiner Herstellung.

Das erfindungsgemäße Stereoblockpolymer ist ein Polymer eines 1-Olefins der Formel $R\text{-}CH=CH_2$, worin R einen Alkylrest mit 1 bis 28 C-Atomen, vorzugsweise 1 bis 10 C-Atomen, insbesondere einen C-Atom bedeutet, beispielsweise Propylen, Buten-(1), Hexen-(1), 4-Methylpenten-(1), Octen-(1). Insbesondere ist das Polymer ein Propylenpolymer. Seine Molekülketten bestehen alternierend aus isotaktischen entgegengesetzt konfigurierten Sequenzen mit einer Länge von drei oder mehr Monomereinheiten. Das Polymer besitzt zusätzlich eine breite Molmassenverteilung, welche uni-, bi-, tri-oder multimodal, vorzugsweise bi, tri- oder multimodal, insbesondere bi- oder trimodal ist.

Die Figur zeigt ein typisches Gelpermeationschromatogramm (GPC) eines erfindungsgemäßen Stereoblockpolymeren mit einem $M_w/_n$-Wert von 14,9.

Der für das erfindungsgemäße Verfahren zu verwendende Katalysator besteht aus einer Metallocenverbindung der Formel I und einem Alumoxan. In Formel I

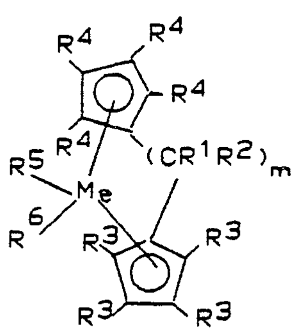

(I)

ist Me ein Metall der Gruppe IVb, Vb oder VIb des Periodensystems, beispielsweise Titan, Zirkon, Hafnium, Vanadium, Chrom, Molybdän, Wolfram, vorzugsweise Titan.

$R^1$ und $R^2$ sind gleich oder verschieden und bedeuten $C_1$- bis $C_{10}$-Alkyl, $C_6$- bis $C_{10}$-Aryl, $C_2$- bis $C_{10}$-Alkenyl, $C_7$- bis $C_{40}$-Arylalkyl, vorzugsweise Ethyl, Methyl, insbesondere Methyl.

$R^3$ und $R^4$ sind gleich oder verschieden und bedeuten ein Wasserstoffatom oder eine Methylgruppe, vorzugsweise ein Wasserstoffatom.

$R^5$ und $R^6$ sind ebenfalls gleich oder verschieden und bedeuten ein Halogenatom wie Chlor, Brom oder Jod, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl oder $C_8$- bis $C_{40}$-Arylalkenyl, vorzugsweise Methyl oder Chlor, insbesondere Chlor.

m ist 2, 3 oder 4, vorzugsweise 2.

Die besonders bevorzugt eingesetzte Metallocenverbindung ist Tetramethylethylen-bis-(cyclopentadienyl)-titandichlorid. Dieser Typ Verbindung kann beispielsweise hergestellt werden durch reduktive Kupplung von 6,6-Dimethylfulven mit Natriumamalgam, Natriumanthracenid oder Magnesiumetall/$CCl_4$ als Reduktionsmittel mit nachfolgender Umsetzung der anionischen Tetramethyldicylopentadienylethan-Verbindung mit $TiCl_4$ oder $ZrCl_4$.

Die zweite Komponente des erfindungsgemäßen Katalysators ist eine Alumoxan der Formel II

$Al_2OR^7{}_4$-[-Al($R^7$)-O-]-$_n$ (II)

für den linearen Typ oder/und der Formel III

-[-Al($R^7$)-O-]-$_{n+2}$ (III)

für den cyclischen Typ. In diesen Formeln bedeuten $R^7$ Methyl, Ethyl oder Isobutyl, bevorzugt Methyl, und n eine ganze Zahl von 4 bis 20, bevorzugt 10 bis 16.

Das Alumoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösungsmittels eingetragen werden und zwischendurch das Ende der Gasentwicklung jeweils abgewartet wird.

Bei einem weiteren Verfahren wird fein gepulvertes Kupfersulfat-pentahydrat in Toluol aufgeschlämmt und in einem Glaskolben unter Intertgas bei etwa -20 °C mit soviel Aluminiumtrialkyl versetzt, daß je 4 Al-Atome etwa 1 Mol $CuSO_4 \bullet 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das in Toluol gelöste Alumoxan von dem Kupfersulfat abfiltriert und das Toluol unter Vakuum abdestilliert. Es wird angenommen, daß bei diesem Herstellungsverfahren die niedermolekularen Alumoxane unter Abspaltung von Aluminiumtrialkyl zu höheren Oligomeren kondensieren.

Schließlich erhält man Alumoxane, wenn man bei einer Temperatur von -20 bis 100 °C in einem inerten aliphatischen oder aromatischen Lösungsmittel gelöstes Aluminiumtrialkyl mit kristallwasserhaltigen Aluminiumsalzen, vorzugsweise Aluminiumsulfat, zur Reaktion bringt.

Dabei beträgt das Volumenverhältnis zwischen Lösungsmittel und dem verwendeten Aluminumalkyl 1:1 bis 50:1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminumsalzen werden bevorzugt jene verwandt, die einen hohen Gehalt an Kristallwasser aufweisen. Besonders bevorzugt ist Aluminiumsulfat-Hydrat, vor allem die Verbindungen $Al_2(SO_4)_3 \bullet 18H_2O$ und $Al_2(SO_4)_3 \bullet 16H_2O$ mit dem besonders hohen Kristallwassergehalt von 16 bzw. 18 Mol $H_2O$/Mol $Al_2(SO_4)_3$.

Der erfindungsgemäß zu verwendende Katalysator wird zur Polymerisation von 1-Olefinen der Formel R-CH = $CH_2$ wie obenstehend erwähnt eingesetzt.

Die Polymerisation wird in bekannter Weise in Lösung, in Suspension oder in der Gasphase, kontinuierlich oder diskontinuierlich, ein- oder mehrstufig bei einer Temperatur von -60 bis 100 °C, vorzugsweise -20 bis 80 °C durchgeführt. Der Druck beträgt 0,5 bis 60 bar. Bevorzugt ist die Polymerisation in dem technisch besonders interessanten Druckbereich von 5 bis 60 bar.

Dabei wird die Metallocenverbindung in einer Konzentration, bezogen auf Titan bzw. Zirkon, von $10^{-3}$ bis $10^{-6}$, vorzugsweise $10^{-4}$ bis $10^{-5}$ Mol Ti bzw. Zr pro Liter Lösungsmittel pro Liter Reaktorvolumen angewendet. Das Alumoxan wird in einer Konzentration von $10^{-4}$ bis $10^{-1}$ Mol, vorzugsweise $10^{-3}$ bis $10^{-2}$ Mol pro Liter Lösungsmittel bzw. pro Liter Reaktorvolumen verwendet. Prinzipiell sind aber auch höhere Konzentrationen möglich.

Die Polymerisation wird in einem für das Ziegler-Niederdruckverfahren gebräuchlichen inerten Lösungsmittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- oder hydrierte Dieselölfraktion, die sorgfältig von Sauerstoff, Schwefelverbindungen und Feuchtigkeit befreit worden ist, benutzt werden. Brauchbar ist auch Toluol. Schließlich kann auch das zu polymerisierende Monomere als Lösungs- oder Suspensionsmittel eingesetzt werden. Das Molekulargewicht des Polymerisats kann in bekannter Weise geregelt werden; vorzugsweise wird dazu Wasserstoff verwendet.

**Beispiel 1**

Ein trockener mit Argon befüllter Glasautoklav wurde bei -60 °C mit 250 ml trockenem Toluol, 300 mg Methylalumoxan mit einem Oligomerisierungsgard von n = 16 und 45 g Propylen gefüllt. In diese Lösung wurde $2 \cdot 10^{-5}$ mol Tetramethylethylenbis(cyclopentadienyl)titandichlorid gegeben.

Nach einer Polymerisationszeit von 42 Stunden wurden 9,6 g gummiartiges Polypropylen erhalten. Die Aktivität betrug 11,4 kg PP/molTi•h, das viskosimetrisch erhaltene Molmassenmittel lag bei $M_{eta}$ = 190.000.

Die Länge der isotaktischen Sequenz betrug 5,2; $M_w/M_n$ = 14,9.

**Beispiel 2**

Es wurde wie in Beispiel 1 gearbeitet, aber mit einer Polymerisationstemperatur von -40 °C. Polymerisationszeit 47 Stunden, Ausbeute 9 g PP.
Aktivität 9,6 kg/molTi•h, $M_w/M_n$ = 15,0, Länge der isotaktischen Sequenz 4,3. $M_{eta}$ = 170.000.

**Beispiel 3**

Es wurde wie in Beispiel 2 gearbeitet, aber mit einer Polymerisationstemperatur von -20 °C. Polymerisationszeit 66 Stunden, Ausbeute 8,6 g PP.
Aktivität 6,5 kg/molTi•h, $M_w/M_n$ = 12,9, Länge der isotaktischen Sequenz; 4,2. $M_{eta}$ = 160.000.

**Patentansprüche**
**Patentansprüche für folgende Vertragsstaaten: BE, DE, FR, GB, IT, NL:**

1. Stereoblockpolymer eines 1-Olefins der Formel $RCH=CH_2$, worin R einen Alkylrest mit 1 bis 28 C-Atomen bedeutet, mit alternierenden isotaktischen entgegengesetzt konfigurierten Sequenzen mit einer Länge von 3 oder mehr Monomereinheiten in der Molekülkette und mit einer uni-, bi-, tri- oder multimodalen Molmassenverteilung erhältlich durch das Verfahren laut Anspruch 2.

2. Verfahren zur Herstellung eines 1-Olefin-Stereoblockpolymers durch Polymerisation eines 1-Olefins der Formel $R\text{-}CH=CH_2$, worin R eine Alkylgruppe mit 1 bis 28 C-Atomen ist, bei einer Temperatur von -60 bis 100 °C, bei einem Druck von 0,5 bis 60 bar, in Lösung, in Suspension oder in der Gasphase, in Gegenwart eines Katalysators, welcher aus einer Übergangsmetallverbindung und einem Alumoxan besteht, dadurch gekennzeichnet, daß die Polymerisation in Gegenwart eines Katalysators durchgeführt wird, dessen Übergangsmetallverbindung eine Metallocenverbindung der Formel I

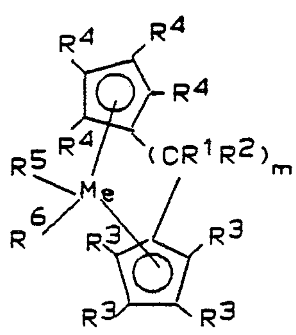

(I) ,

worin

Me ein Metall der Gruppe IVb, Vb oder VIb des Periodensystems der Elemente ist,
$R^1$ und $R^2$ gleich oder verschieden sind und $C_1$- bis $C_{10}$-Alkyl, $C_6$- bis $C_{10}$-Aryl, $C_2$- bis $C_{10}$-Alkenyl oder $C_7$- bis $C_{40}$-Arylalkyl bedeuten,
$R^3$ und $R^4$ gleich oder verschieden sind und ein Wasserstoffatom oder eine Methylgruppe bedeuten und $R^5$ und $R^6$ gleich oder verschieden sind und ein Halogenatom, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl oder $C_8$- bis $C_{40}$-Arylalkenyl bedeuten, und
m 2, 3 oder 4 bedeutet,
und wobei das Alumoxan ein solches der Formel II

$Al_2OR^7{}_4$-[-Al($R^7$)-O-]-$_n$ (II)

für den linearen Typ oder/und der Formel III

-[-Al($R^7$)-O-]-$_{n+2}$ (III)

für den cyclischen Typ ist, wobei in den Formeln II und III $R^7$ Methyl, Ethyl oder Isobutyl bedeutet und n eine ganze Zahl von 4 bis 20 ist.

3. Verfahren nach Anspruch 2, dadurch gekennzeichnet, daß das 1-Olefin Propylen ist.

4. Verfahren nach Anspruch 2, dadurch gekennzeichnet, daß die Metallocenverbindung eine Verbindung des Titans ist.

5. Verfahren nach Anspruch 4, dadurch gekennzeichnet, daß die Metallocenverbindung Tetramethylethylen-bis-(cyclopentadienyl)titandichlorid ist.

**Patentansprüche für folgenden Vertragsstaat: ES**

1. Verfahren zur Herstellung eines 1-Olefin-Stereoblockpolymer durch Polymerisation eines 1-Olefins der Formel $RCH=CH_2$, worin R einen Alkylgruppe mit 1 bis 28 C-Atomen ist, mit alternierenden isotaktischen entgegengesetzt konfigurierten Sequenzen mit einer Länge von 3 oder mehr Monomereinheiten in der Molekülkette und mit einer uni-, bi-, tri- oder multimodalen Molmassenverteilung, bei einer Temperatur von -60 bis 100 °C, bei einem Druck von 0,5 bis 60 bar, in Lösung, in Suspension oder in der Gasphase, in Gegenwart eines Katalysators, welcher aus einer Übergangsmetallverbindung und einem Alumoxan besteht, dadurch gekennzeichnet, daß die Polymerisation in Gegenwart eines Katalysators durchgeführt wird, dessen Übergangsmetallverbindung eine Metallocenverbindung der Formel I

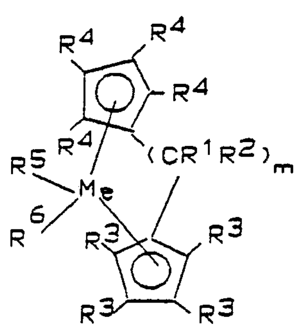

(I) ,

worin
Me ein Metall der Gruppe IVb, Vb oder VIb des Periodensystems der Elemente ist,
$R^1$ und $R^2$ gleich oder verschieden sind und $C_1$- bis $C_{10}$-Alkyl, $C_6$- bis $C_{10}$-Aryl, $C_2$- bis $C_{10}$-Alkenyl oder $C_7$- bis $C_{40}$-Arylalkyl bedeuten,
$R^3$ und $R^4$ gleich oder verschieden sind und ein Wasserstoffatom oder eine Methylgruppe bedeuten und $R^5$ und $R^6$ gleich oder verschieden sind und ein Halogenatom, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl oder $C_8$- bis $C_{40}$-Arylalkenyl bedeuten, und
m 2, 3 oder 4 bedeutet,

und wobei das Alumoxan ein solches der Formel II

$Al_2OR^7{}_4$-[-Al($R^7$)-O-]-$_n$ (II)

für den linearen Typ oder/und der Formel III

-[-Al($R^7$)-O-]-$_{n+2}$ (III)

für den cyclischen Typ ist, wobei in den Formeln II und III $R^7$ Methyl, Ethyl oder Isobutyl bedeutet und n eine ganze Zahl von 4 bis 20 ist.

2. Verfahren nach Anspruch 2, dadurch gekennzeichnet, daß das 1-Olefin Propylen ist.

3. Verfahren nach Anspruch 2, dadurch gekennzeichnet, daß die Metallocenverbindung eine Verbindung des Titans ist.

4. Verfahren nach Anspruch 4, dadurch gekennzeichnet, daß die Metallocenverbindung Tetramethylethylen-bis-(cyclopentadienyl)titandichlorid ist.

**Claims**

**Claims for the following Contracting States: BE, DE, FR, GB, IT, NL**

1. A stereoblock polymer of a 1-olefin of the formula $RCH=CH_2$ in which R denotes an alkyl radical having 1 to 28 carbon atoms, having alternating isotactic sequences with an opposed configuration and a length of 3 or more monomer units in the molecular chain and having a uni-, bi-, tri- or multimodal molecular weight distribution, obtainable by the process as claimed in claim 2.

2. A process for the preparation of a 1-olefin stereoblock polymer through polymerization of a 1-olefin of the formula $R-CH=CR_2$ in which R is an alkyl group having 1 to 28 carbon atoms, at a temperature of -60 to 100 °C, at a pressure of 0.5 to 60 bar, in solution, in suspension or in the gas phase, in the presence of a catalyst which consists of a transition metal compound and an alumoxane, which comprises carrying out the polymerization in the presence of a catalyst whose transition metal compound is a metallocene compound of the formula I

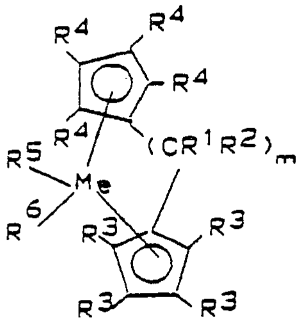

(I),

in which

Me is a metal of group IVb, Vb or VIb of the periodic table of the elements,

$R^1$ and $R^2$ are identical or different and denote $C_1$- to $C_{10}$-alkyl, $C_6$- to $C_{10}$-aryl, $C_2$- to $C_{10}$-alkenyl or $C_7$-to $C_{40}$-arylalkyl,

$R^3$ and $R^4$ are identical or different and denote a hydrogen atom or a methyl group, and

$R^5$ and $R^6$ are identical or different and denote a halogen atom, $C_1$- to $C_{10}$-alkyl, $C_6$- to $C_{10}$-aryl, $C_2$- to $C_{10}$-alkenyl, $C_7$- to $C_{40}$-arylalkyl or $C_8$- to $C_{40}$-arylalkenyl, and

m denotes 2, 3 or 4,

and where the alumoxane is one of the formula II

$Al_2OR^7{}_4$-[-Al($R^7$)-O-]-$_n$ (II)

for the linear type and/or of the formula III

$-[-Al(R^7)-O-]-_{n+2}$ (III)

or the cyclic type, and where, in the formulae II and III, $R^7$ denotes methyl, ethyl or isobutyl and n is an integer from 4 to 20.

3. The process as claimed in claim 2, wherein the 1-olefin is propylene.

4. The process as claimed in claim 2, wherein the metallocene compound is a compound of titanium.

5. The process as claimed in claim 4, wherein the metallocene compound is tetramethylethylene-bis-(cyclopentadienyl)titanium dichloride.

**Claims for the following Contracting State: ES**

1. A process for the preparation of a 1-olefin stereoblock polymer through polymerization of a 1-olefin of the formula $R-CH=CH_2$ in which R is an alkyl group having 1 to 28 carbon atoms, having alternating isotactic sequences with an opposed configuration and a length of 3 or more monomer units in the molecular chain and having a uni-, bi-, tri- or multimodal molecular weight distribution, at a temperature of -60 to 100 °C, at a pressure of 0.5 to 60 bar, in solution, in suspension or in the gas phase, in the presence of a catalyst which consists of a transition metal compound and an alumoxane, which comprises carrying out the polymerization in the presence of a catalyst whose transition metal compound is a metallocene compound of the formula I

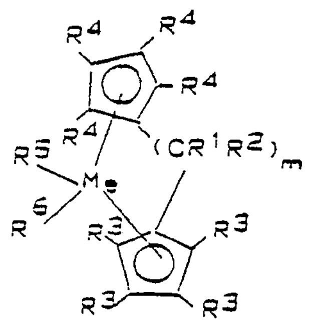

(I),

in which
Me is a metal of group IVb, Vb or VIb of the periodic table of the elements,
$R^1$ and $R^2$ are identical or different and denote $C_1$- to $C_{10}$-alkyl, $C_6$- to $C_{10}$-aryl, $C_2$- to $C_{10}$-alkenyl or $C_7$-to $C_{40}$-arylalkyl,
$R^3$ and $R^4$ are identical or different and denote a hydrogen atom or a methyl group, and
$R^5$ and $R^6$ are identical or different and denote a halogen atom, $C_1$- to $C_{10}$-alkyl, $C_6$- to $C_{10}$-aryl, $C_2$- to $C_{10}$-alkenyl, $C_7$- to $C_{40}$-arylalkyl or $C_8$- to $C_{40}$-arylalkenyl, and
m denotes 2, 3 or 4,
and where the alumoxane is one of the formula II

$Al_2OR^7{}_4-[-Al(R^7)-O-]-_n$ (II)

for the linear type and/or of the formula III

$-[-Al(R^7)-O-]-_{n+2}$ (III)

for the cyclic type, and where, in the formulae II and III, $R^7$ denotes methyl, ethyl or isobutyl and n is an integer from 4 to 20.

2. The process as claimed in claim 1, wherein the 1-olefin is propylene.

**3.** The process as claimed in claim 1, wherein the metallocene compound is a compound of titanium.

**4.** The process as claimed in claim 3, wherein the metallocene compound is tetramethylethylene-bis-(cyclopentadienyl)titanium dichloride.

**Revendications**
**Revendications pour les Etats contractants suivants: BE, DE, FR, GB, IT, NL**

**1.** Polymère stéréoséquencé d'une $\alpha$-oléfine répondant à la formule $R\text{-}CH=CH_2$ dans laquelle R représente un alkyle contenant de 1 à 28 atomes de carbone, polymère dont la chaine moléculaire comporte, suivant une disposition alternée, des séquences isotactiques de configurations opposées et d'une longueur d'au moins trois motifs monomères, qui a une distribution de masse moléculaire unimodale, bimodale, trimodale ou multimodale et qui peut être obtenu par le procédé selon la revendication 2.

**2.** Procédé pour préparer un polymère stéréoséquencé d'une $\alpha$-oléfine par polymérisation d'une $\alpha$-oléfine répondant à la formule $R\text{-}CH=CH_2$ dans laquelle R désigne un alkyle contenant de 1 à 28 atomes de carbone, à une température de -60 à 100° C, sous une pression de 0,5 à 60 bar, en solution, en suspension ou en phase gazeuse, en présence d'un catalyseur constitué d'un composé d'un métal de transition et d'un aluminoxane, procédé caractérisé en ce qu on effectue la polymérisation en présence d'un catalyseur dont le composé d'un métal de transition est un métallocène répondant à la formule I :

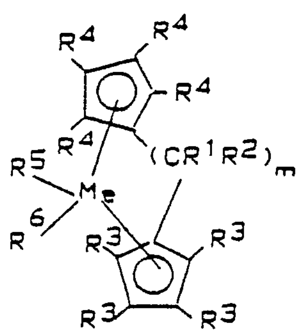

(I)

dans laquelle

| | |
|---|---|
| Me | représente un métal appartenant à l'un des groupes IVB, VB et VIB de la classification périodique des éléments, |
| $R^1$ et $R^2$ | sont identiques ou différents et représentent chacun un alkyle en $C_1$-$C_{10}$, un aryle en $C_6$-$C_{10}$, un alcényle en $C_2$-$C_{10}$ ou un aryl-alkyle en $C_7$-$C_{40}$, |
| $R^3$ et $R^4$ | sont identiques ou différents et représentent chacun un atome d'hydrogène ou un radical méthyle, |
| $R^5$ et $R^6$ | sont identiques ou différents et représentent chacun un atome d'halogène, un alkyle en $C_1$-$C_{10}$, un aryle en $C_6$-$C_{10}$, un alcényle en $C_2$-$C_{10}$, un aryl-alkyle en $C_7$-$C_{40}$ ou un aryl-alcényle en $C_8$-$C_{40}$, et |
| m | est égal à 2, à 3 ou à 4, |

et dont l'aluminoxane est un aluminoxane de formule II :

$Al_2OR^7{}_4\text{-}[\text{-}Al(R^7)\text{-}O\text{-}]\text{-}_n$ (II)

pour le type linéaire, et/ou de formule III :

$\text{-}[Al(R^7)\text{-}O\text{-}]\text{-}_{n+2}$ (III)

pour le type cyclique, formules dans lesquelles $R^7$ représente un radical méthyle, éthyle ou isobutyle et n un nombre entier de 4 à 20.

**3.** Procédé selon la revendication 2 caractérisé en ce que l'$\alpha$-oléfine est le propylène.

4. Procédé selon la revendication 2 caractérisé en ce que le métallocène est un composé du titane.

5. Procédé selon la revendication 4 caractérisé en ce que le métallocène est le dichlorure de tétraméthyléthylène-bis-(cyclopentadiényl)-titane.

**Revendications pour l'Etat contractant suivant: ES**

1. Procédé pour préparer un polymère stéréoséquencé d'une α-oléfine par polymérisation d'une α-oléfine répondant à la formule $R\text{-}CH=CH_2$ dans laquelle R représente un alkyle contenant de 1 à 28 atomes de carbone, polymère dont la chaine moléculaire comporte, suivant une disposition alternée, des séquences isotactiques de configurations opposées et d'une longueur d'au moins trois motifs monomères, et qui a une distribution de masse moléculaire unimodale, bimodale, trimodale ou multimodale, à une température de -60 à 100 °C, sous une pression de 0,5 à 60 bar, en solution, en suspension ou en phase gazeuse, en présence d'un catalyseur constitué d'un composé d'un métal de transition et d'un aluminoxane, procédé caractérisé en ce qu'on effectue la polymérisation en présence d'un catalyseur dont le composé d'un métal de transition est un métallocène répondant à la formule I :

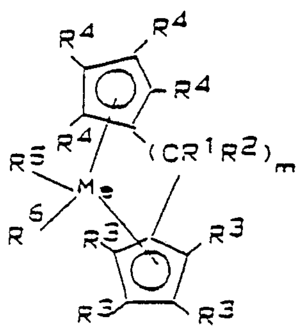

(I)

dans laquelle

| | |
|---|---|
| Me | représente un métal d'un des groupes IVB, VB et VIB de la classification périodique des éléments, |
| $R^1$ et $R^2$ | sont identiques ou différents et représentent chacun un alkyle en $C_1$-$C_{10}$, un aryle en $C_6$-$C_{10}$, un alcényle en $C_2$-$C_{10}$ ou un aryl-alkyle en $C_7$-$C_{40}$, |
| $R^3$ et $R^4$ | sont identiques ou différents et représentent chacun un atome d'hydrogène ou un radical méthyle, |
| $R^5$ et $R^6$ | sont identiques ou différents et représentent chacun un atome d'halogène, un alkyle en $C_1$-$C_{10}$, un aryle en $C_6$-$C_{10}$, un alcényle en $C_2$-$C_{10}$, un aryl-alkyle en $C_7$-$C_{40}$ ou un aryl-alcényle en $C_8$-$C_{40}$, et |
| m | est égal à 2, à 3 ou à 4, |

et dont l'aluminoxane est un aluminoxane de formule II :

$Al_2OR^7{}_4\text{-}[\text{-}Al(R^7)\text{-}O\text{-}]\text{-}_n$ (II)

pour le type linéaire, et/ou de formule III :

$\text{-}[\text{-}Al(R^7\text{-}O\text{-}]\text{-}_{n+2}$ (III)

pour le type cyclique, formules dans lesquelles $R^7$ représente un radical méthyle, éthyle ou isobutyle et n un nombre entier de 4 à 20.

2. Procédé selon la revendication 1 caractérisé en ce que l'α-oléfine et le propylène.

3. Procédé selon la revendication 1 caractérisé en ce que le métallocène est un composé du titane.

4. Procédé selon la revendication 3 caractérisé en ce que le métallocène est le dichlorure de tétraméthyléthylène-bis-(cyclopentadiényl)-titane.

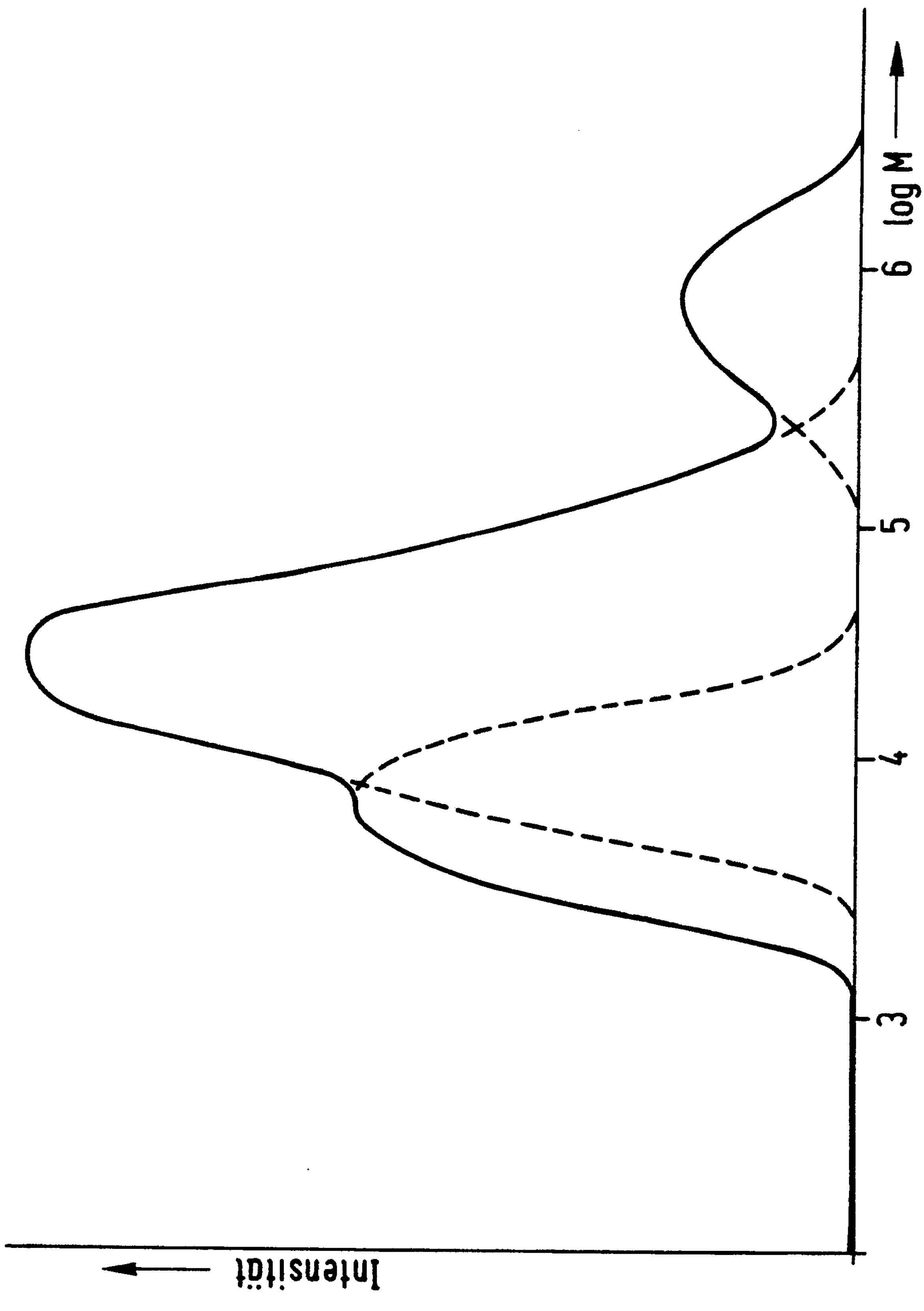
Intensität
log M
3
4
5
6